# EUROPEAN PATENT APPLICATION

(11) **EP 3 352 386 A1**
(43) Date of publication of application: **25.07.2018**
(21) Application number: 17152691.6
(22) Date of filing: 23.01.2017
(51) Int. Cl.: H04B 10/116

(54) **VISIBLE LIGHT COMMUNICATION DEVICE AND COMMUNICATION METHOD**

(71) Applicant: Vestel Elektronik Sanayi ve Ticaret A.S., 45030 Manisa (TR)
(72) Inventor: ÖZKÜCÜK, Serhat, 45030 Manisa (TR)
(74) Representative: Ascherl, Andreas

(57) **Abstract**

The present invention provides a communication device (100, 200) for a visible light communication system (1) that communicates via visible light, the communication device (100, 200) comprising a light sensing device (101, 201) configured to sense the incoming visible light (102, 202) and provide respective electrical signals (103, 203) based on the sensed incoming visible light (102, 202), and a light generation device (104, 204) that is electrically connected to the light sensing device (101, 201) and is configured to generate outgoing visible light (105, 205) based on the electrical signals (103, 203) provided by the light sensing device (101, 201). Further, the present invention provides a respective communication method.

## Description

### TECHNICAL FIELD

The invention relates to a communication device for a visible light communication system. Further, the invention relates to a respective communication method.

### BACKGROUND

Although applicable to any system that transmits data via light, the present invention will be mainly described in conjunction with visible light data transmission systems.

In modern data transmission systems an ever increasing bandwidth is required for applications like e.g. high definition video streaming or the like. Using RF networks provides limited bandwidth and in case a plurality of RF networks, e.g. WLAN networks, are implemented near to each other, interference may occur.

Visible light communication may therefore substitute or complement RF networks. Light Fidelity (Li-Fi) for example is a bidirectional, high-speed and fully networked wireless communication technology similar to Wi-Fi. Li-Fi is a form of visible light communication and a subset of optical wireless communications (OWC).

In such visible light data communication systems, usually a visible light source, like e.g. a led lamp, is provided and this source is on-off switched or modulated at a frequency that a human eye cannot perceive. The performance of such systems decreases in blind spots, like e.g. dark and shady places, where the visible light does not fully reach. Data transfer performance may therefore be reduced or fail in such places.

Accordingly, there is a need for an improved visible light communication.

### SUMMARY

The present invention provides a communication device with the features of claim 1 and a communication method with the features of claim 11.

Therefore it is provided:
A communication device for a visible light communication system that communicates via visible light, the communication device comprising a light sensing device configured to sense incoming visible light and provide respective electrical signals based on the sensed incoming visible light, and a light generation device that is electrically connected to the light sensing device and is configured to generate outgoing visible light based on the electrical signals provided by the light sensing device.

Further, it is provided:
A communication method for communicating data in a visible light communication system that communicates via visible light, the communication method comprising sensing incoming visible light, providing respective electrical signals based on the sensed incoming visible light, and generating outgoing visible light based on the provided electrical signals.

The light sensing device of the communication device may be seen as a kind of receiver for the visible light of the visible light communication system. However, instead of analyzing the incoming visible light for the data content transmitted by the visible light communication system, the light sensing device will simply provide electrical signals, which at least represent or show the variations or modulation of the intensity of the incoming visible light of the visible light communication system.

These electrical signals will then be forwarded to the light generation device that will generate outgoing visible light based on the electrical signals provided by the light sensing device. The outgoing visible light generated by the light generation device will therefore comprise the same modulations or variations as the incoming visible light sensed by the light sensing device and can e.g. be seen as a copy of the incoming visible light sensed by the light sensing device.

The communication device of the present invention may therefore e.g. be used to extend the range of a visible light communication system. The light sensing device may e.g. be provided where the visible light of the visible light communication system is readily received, while the light generation device may be provided at a position, where the incoming visible light of the visible light communication system may not be received.

Further, no extensive decoding of the data transported in the incoming visible light is necessary and no encoding of the data into the outgoing visible light is necessary to provide the range extension for the visible light communication system.

Further embodiments of the present invention are subject of the further subclaims and of the following description, referring to the drawings.

In an embodiment, the light sensing device may comprise a photo transistor or a photo diode. Photo transistors or photo diodes, like e.g. PIN photo diodes or avalanche diodes, are simple yet very effective elements for sensing the incoming visible light. Further these types of elements directly provide the required electrical signals. The type of light sensing device may be selected according to the required bandwidth, light colors, wavelengths, the devices raise and fall times or the like.

In an embodiment, the light generation device may comprise an electrical arc lamp and/or a light emitting diode arrangement. Especially electric arc lamps have a fast response time and can be switched at high frequencies.
Using such lamps therefore allows transmitting high bandwidth modulated outgoing visible light. Electric arc lamps may e.g. comprise two sharp pointed metal probes as positive and negative poles in a transparent vacuum tube. The positive and the negative sharp pointed metal probes may then be located opposing very close and non-contacting to each other in the vacuum tube. The electric arc lamps can be used as a powerful visible light source e.g. for Li-Fi systems or other visible light communication systems.

With LED lights a light source is provided that also provides a fast response time and further has a low power consumption.

In an embodiment, the communication device may further comprise a first optical system configured to focus the incoming visible light onto the light sensing device. Focusing the incoming visible light onto the light sensing device will increase the amount of light that may be detected by the light sensing device. Therefore detection of variations or modulations of the incoming visible light will be improved.

In an embodiment, the first optical system may comprise a convex lens. A convex lens is a very simple type of optical element that however effectively focuses the incoming visible light onto the light sensing device.

It is understood that the first optical system may comprise any number of optical elements that focus the incoming visible light onto the light sensing device. Other possible types of optical elements may e.g. be Fresnel lenses or the like.

Further, the first optical system may e.g. comprise an optical wavelength filter. Such an optical wavelength filter may pass the relevant wavelengths that are used by the visible light communication system to transmit data while attenuating other wavelengths.

In an embodiment, the communication device may comprise a second optical system configured to spread the outgoing visible light of the light generation device. Spreading the light that is generated by the light generation device provides an improved coverage in the area that is irradiated by the light generation device.

In an embodiment, the second optical system may comprise a concave lens. A concave lens is a very simple type of optical element that however effectively spreads the outgoing visible light.

It is understood that the second optical system may comprise any number of optical elements that spread the outgoing visible light. Other possible types of optical elements may e.g. be Fresnel lenses or the like.

In an embodiment, the communication device may comprise a switching element coupled between the light sensing device and the light generation device and configured to switch the light generation device based on the electrical signals.

The switching element may e.g. be a transistor, like a bipolar transistor or a MOSFET, that has its control input, e.g. the base or gate input, connected to the output of the light sensing device. The power path of the transistor, e.g. the collector-emitter path or the drain-source path, may be provided in the power supply path of the light generation device.

In an embodiment, the light sensing device may comprises a phototransistor and the output signal of the photo transistor may be the input signal to the switching element. The switching element will therefore turn on and off or modulate, e.g. dim, the light emitted by the light generation device according to the modulation of the incoming visible light as received by the photo transistor.

In an embodiment, the communication device may comprise an amplifier coupled between the light sensing device and the light generation device and configured to amplify the electrical signals provided by the light sensing device.

The signal level of the electronic signal provided by the signal sensing device may be rather low and not be sufficient to directly drive the input of the light generation device or the switching element. With the amplifier the signal level of the electrical signals may be increased to a level that can directly drive the light generation device or alternatively directly drive the switching element.

The amplifier may be dimensioned such that the light generation device is turned on and off according to the received or sensed incoming visible light or such that the light generation device is only modulated, i.e. without being completely turned on/off.

In an embodiment, the light generation device may e.g. be a LED and the amplifier may be dimensioned to directly drive the LED.

The amplifier may e.g. comprise discrete elements. As an alternative the amplifier may comprise an integrated amplifier, like e.g. an operational amplifier.

In an embodiment, the communication device may comprise a filter element coupled to the light sensing device and configured to filter the electrical signals such that at least signal components of a predetermined frequency or frequency range pass the filter element. The filter element may e.g. be provided as a bandpass filter or a high pass filter or any other adequate filter. Such a filter may comprise electric elements like e.g. resistors, capacitors, inductors or the like.

The filter element may e.g. be provided between the light sensing device and the following element, e.g. the amplifier, the switching element or the light generation device. With the help of the filter the relevant signal components may be extracted from the electrical signals for generation of outgoing visible light by the light generation device.

The communication device may e.g. comprise an energy source that provides the elements of the communication device with the required electrical energy. Such an energy source may be a mains powered energy source, a battery, a solar cell or the like. The communication device may e.g. comprise a combination of a solar cell and a battery. Such a combination may allow autonomous operation of the communication device in remote or isolated environments. The communication device may comprise any type of energy generation device, like the above mentioned solar cell.

It can be seen from the above that with the present invention a very simple range extender may be provided for visible light communication systems that does not need any active digital logic devices.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a communication device according to the present invention;
Fig. 2 shows another block diagram of an embodiment of a communication device according to the present invention; and
Fig. 3 shows a flow diagram of an embodiment of a communication method according to the present invention.

In the figures like reference signs denote like elements unless stated otherwise.

### DETAILED DESCRIPTION OF THE DRAWINGS

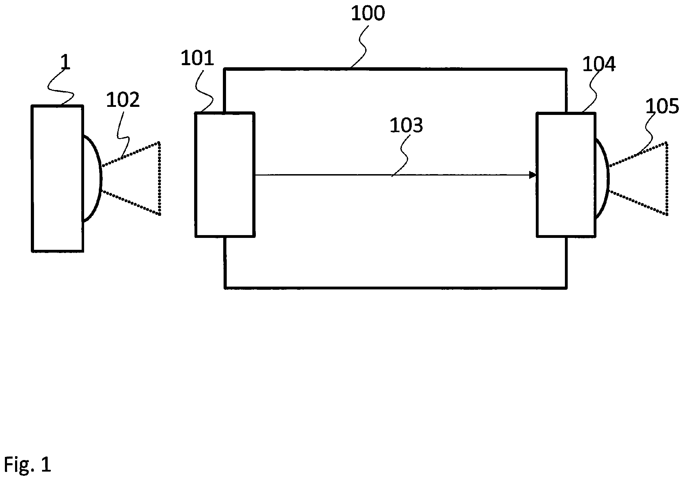

Fig. 1 shows a communication device 100 for use with a visible light communication system 1. The communication device 100 may e.g. be used to extend the coverage or reach of the visible light communication system 1 or to amplify the signals of the visible light communication system 1.

In Fig. 1 the visible light communication system 1 is simply shown as a light emitter. It is understood, that the shown light emitter is just exemplarily shown instead of a complex visible light communication system 1.

To accomplish this, the communication device 100 comprises a light sensing device 101 that senses incoming visible light 102. The incoming visible light may be provided by a single light emitter or be the light of a plurality of light emitters that comprise a modulation to transmit data.

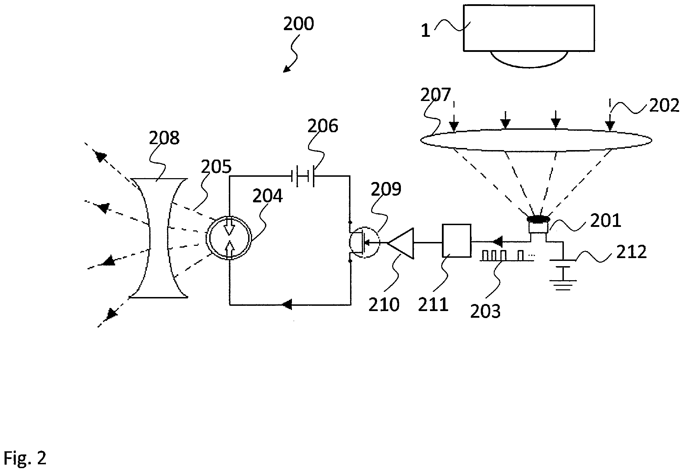

The light sensing device 101 further generates respective electrical signals 103. These electrical signals 103 are provided to a light generation device 104 that generates outgoing visible light 105 based on the electrical signals 103. The electrical signals 103 may be directly provided to the light generation device 104 or indirectly. It is understood, that any element may be provided between the light sensing device 101 and the light generation device 104 that may support or be necessary for driving the light generation device 104 with the electrical signals 103. An exemplary arrangement will be explained in conjunction with Fig. 2 below.

In a real application, e.g. the light sensing device 101 may be positioned where the incoming visible light 102 may be received or sensed with sufficient intensity. The light generation device 104 may in contrast be positioned where the incoming visible light 102 may not be received or sensed with sufficient intensity. Therefore, the data comprised in the incoming visible light 102 may be forwarded to uncovered areas.

Fig. 2 shows another communication device 200. The communication device 200 comprises a photo transistor 201 as light sensing device. It is understood, that instead of the photo transistor 201 e.g. a photo diode or other light sensitive electric components can also be used. Further, in the communication device 200 the incoming visible light 202 is focused onto the light sensing device 201 by a first optical system 207 that comprises a convex lens. This increases the amount of light that hits the light sensing device 201 and therefore increases the sensitivity of the communication device 200. In Fig. 2 just exemplarily the energy supply 212 is shown that provides electrical energy to the photo transistor 201.

The photo transistor 201 generates an electrical signal 203 based on the incoming visible light 202. Generating electrical signals 203 may e.g. comprise modulating or switching a current provided by the energy supply 212. The electrical signal 203 will therefore transport the modulation of the incoming visible light 202 to the light generation device 204. In Fig. 2 the light generation device 204 is shown as an arc lamp.

The electrical signal 203 is provided to the light generation device 204 indirectly, i.e. via additional electric or electronic elements. For example, a switching element 209 is provided, that interrupts or closes an electrical circuit consisting of the light generation device 204 and an energy source 206. This switching element 209 is provided with the electrical signal 203 at its control input. Therefore, the switching element 209 will interrupt and close the electrical circuit according to electrical signals 203 and therefore according to the modulation of the incoming visible light 202.

If above it is said that the electric circuit is interrupted and closed this not only comprises full interruption but also a voltage or current limiting or modulation, e.g. like a dimming of the light generation device 204. The energy source 206, although shown as battery, may be any type of energy source 206. Further, the energy source 206 and the energy source 212 may be provided as a single energy source.

As optional features a filter element 211 and an amplifier 210 may be provided in the signal path of the electrical signal 203.

The filter element 211 may e.g. filter the electrical signal 203 for predetermined frequencies, e.g. the frequencies that are used by the visible light communication system 1 for data transmission.

The amplifier 210 may be used to adapt the level of the electrical signal 203 to the required level for switching the switching element 209.

In Fig. 2 the switching element 209 is provided to drive the arc lamp 204. As an alternative, a LED lamp may be used. Such a LED lamp could e.g. be driven directly by the amplifier 210.

For sake of clarity the reference signs used above regarding communication device will also be used in the following description of the communication method.

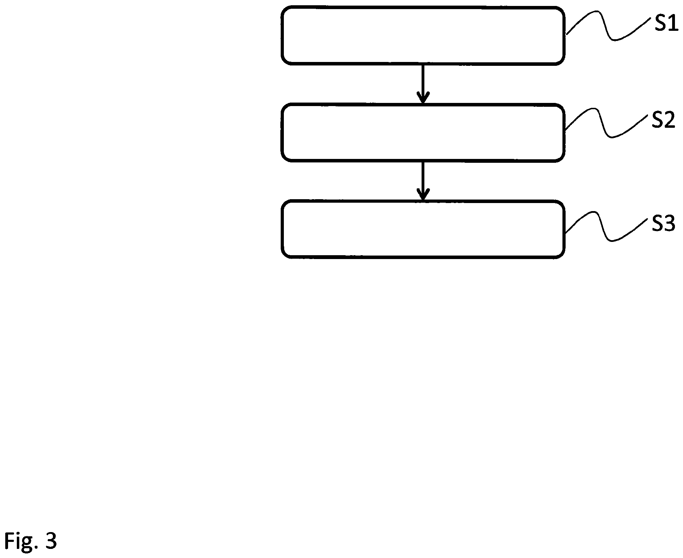

Fig. 3 shows a flow diagram of a communication method for communicating data in a visible light communication system 1 that communicates via visible light.

The communication method comprises sensing S1 incoming visible light 102, 202, providing S2 respective electrical signals 103, 203 based on the sensed incoming visible light 102, 202, and generating S3 outgoing visible light 105, 205 based on the provided electrical signals 103, 203.

Sensing S1 may e.g. comprise sensing the incoming visible light 102, 202 with a photo transistor or a photo diode. Further, generating S3 may comprise generating the outgoing visible light 105, 205 with an electrical arc lamp and/or a light emitting diode arrangement.

The method may further comprise focusing the incoming visible light 102, 202 for sensing the incoming visible light 102, 202, especially with a convex lens. Further, the outgoing visible light 105, 205 after generation of the outgoing visible light 105, 205 may be spread, especially with a concave lens.

Generating S3 the outgoing visible light 105, 205 may comprise switching a light generation device 104, 204 based on the electrical signals 103, 203.

Further, the communication method may comprise amplifying the electrical signals 103, 203 after sensing S1 the incoming visible light 102, 202, and/or filtering the electrical signals 103, 203 such that at least signal components of a predetermined frequency or frequency range are passed through.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a communication device (100, 200) for a visible light communication system that communicates via visible light, the communication device (100, 200) comprising a light sensing device (101, 201) configured to sense the incoming visible light (102, 202) and provide respective electrical signals (103, 203) based on the sensed incoming visible light (102, 202), and a light generation device (104, 204) that is electrically connected to the light sensing device (101, 201) and is configured to generate outgoing visible light (105, 205) based on the electrical signals (103, 203) provided by the light sensing device (101, 201). Further, the present invention provides a respective communication method.

### List of reference signs

- 1: visible light communication system
- 100, 200: communication device
- 101, 201: light sensing device
- 102, 202: incoming visible light
- 103, 203: electrical signals
- 104, 204: light generation device
- 105, 205: outgoing visible light
- 206, 212: energy source
- 207: first optical system
- 208: second optical system
- 209: switching element
- 210: amplifier
- 211: filter element

- S1 - S3: method steps

## Claims

1. Communication device (100, 200) for a visible light communication system (1) that communicates via visible light, the communication device (100, 200) comprising:
a light sensing device (101, 201) configured to sense the incoming visible light (102, 202) and provide respective electrical signals (103, 203) based on the sensed incoming visible light (102, 202), and
a light generation device (104, 204) that is electrically connected to the light sensing device (101, 201) and is configured to generate outgoing visible light (105, 205) based on the electrical signals (103, 203) provided by the light sensing device (101, 201).

2. Communication device (100, 200) according to claim 1, wherein the light sensing device (101, 201) comprises a photo transistor or a photo diode.

3. Communication device (100, 200) according to any one of the preceding claims, wherein the light generation device (104, 204) comprises an electrical arc lamp and/or a light emitting diode arrangement.

4. Communication device (100, 200) according to any one of the preceding claims, further comprising a first optical system (207) configured to focus the incoming visible light (102, 202) onto the light sensing device (101, 201).

5. Communication device (100, 200) according to claim 4, wherein the first optical system (207) comprises a convex lens.

6. Communication device (100, 200) according to any one of the preceding claims, comprising a second optical system (208) configured to spread the outgoing visible light (105, 205) of the light generation device (104, 204).

7. Communication device (100, 200) according to claim 6, wherein the second optical system (208) comprises a concave lens.

8. Communication device (100, 200) according to any one of the preceding claims, comprising a switching element (209) coupled between the light sensing device (101, 201) and the light generation device (104, 204) and configured to switch the light generation device (104, 204) based on the electrical signals (103, 203).

9. Communication device (100, 200) according to any one of the preceding claims, comprising an amplifier (210) coupled between the light sensing device (101, 201) and the light generation device (104, 204) and configured to amplify the electrical signals (103, 203) provided by the light sensing device (101, 201).

10. Communication device (100, 200) according to any one of the preceding claims, comprising a filter element (211) coupled to the light sensing device (101, 201) and configured to filter the electrical signals (103, 203) such that at least signal components of a predetermined frequency or frequency range pass the filter element (211).

11. Communication method for communicating data in a visible light communication system (1) that communicates via visible light, the communication method comprising:
sensing (S1) incoming visible light (102, 202),
providing (S2) respective electrical signals (103, 203) based on the sensed incoming visible light (102, 202),
generating (S3) outgoing visible light (105, 205) based on the provided electrical signals (103, 203).

12. Communication method according to claim 1, wherein sensing comprises sensing the incoming visible light (102, 202) with a photo transistor or a photo diode; and/or
wherein generating comprises generating the outgoing visible light (105, 205) with an electrical arc lamp and/or a light emitting diode arrangement.

13. Communication method according to any one of the preceding claims 11 and 12, comprising
focusing the incoming visible light (102, 202) for sensing the incoming visible light (102, 202), especially with a convex lens; and/or
spreading the outgoing visible light (105, 205) after generation of the outgoing visible light (105, 205), especially with a concave lens.

14. Communication method according to any one of the preceding claims 11 to 13, wherein generating the outgoing visible light (105, 205) comprises switching a light generation device (104, 204) based on the electrical signals (103, 203).

15. Communication method according to any one of the preceding claims 11 to 14, comprising
amplifying the electrical signals (103, 203) after sensing the incoming visible light (102, 202); and/or
filtering the electrical signals (103, 203) such that at least signal components of a predetermined frequency or frequency range are passed through.
